# EUROPÄISCHE PATENTANMELDUNG

(11) **EP 4 588 753 A1**
(43) Veröffentlichungstag der Anmeldung: **23.07.2025**
(21) Anmeldenummer: 24152071.7
(22) Anmeldetag: 16.01.2024
(51) Int. Cl.: B61L 23/04, B61L 27/53, B60M 3/00

(54) **EISENBAHNTECHNISCHE ANLAGE, SENSOREINRICHTUNG UND VERFAHREN ZUM ERKENNEN EINES SCHIENENBRUCHS**

(71) Anmelder: Siemens Mobility GmbH, 81739 München (DE)
(72) Erfinder: Linnas, Iuliia, 38302 Wolfenbüttel (DE); Sidoroski, Goranco, 38126 Braunschweig (DE)
(74) Vertreter: Siemens Patent Attorneys

(57) **Zusammenfassung**

Die Erfindung betrifft eine eisenbahntechnische Anlage (1) mit wenigstens einer Fahrstrecke (2) mit je zwei Schienen (3),
mit wenigstens einem sich auf der Fahrstrecke (2) bewegenden elektrischen Schienenfahrzeug (5),
mit wenigstens einer Traktionsenergieversorgungseinrichtung (6) zur Traktionsenergieversorgung des Schienenfahrzeugs (5), und
mit wenigstens einer Sensoreinrichtung (16) zum Erkennen eines Schienenbruchs (20), wobei die Traktionsenergieversorgungseinrichtung (6) wenigstens ein Unterwerk (7), wenigstens einen Zuleitungspfad (8) in Richtung des Schienenfahrzeugs (5) und wenigstens zwei parallele Rückleitungspfade (9) vom Schienenfahrzeug (5) weg umfasst,
und wobei der Zuleitungspfad (8) zumindest teilweise von einer entlang der Fahrstrecke (2) angeordneten Fahrleitung (10) und die zwei Rückleitungspfade (9) zumindest teilweise von den zwei Schienen (3) ausgebildet werden.

Um Schienenbrüche (20) einfach und kostengünstig erkennen zu können, ist erfindungsgemäß vorgesehen, dass die Sensoreinrichtung (16) mit den zwei Rückleitungspfaden (9) verbunden ist und zum Ermitteln wenigstens eines Werts, der für eine Stromdifferenz in den Rückleitungspfaden (9) und/oder für eine Spannung zwischen den Rückleitungspfaden (9) repräsentativ ist, ausgebildet ist und wenigstens eine Recheneinrichtung (18) umfasst, die zum Ausgeben wenigstens eines Schienenbruchsignals (21), wenn der ermittelte Wert außerhalb eines vorgegebenen Bereichs liegt, ausgebildet ist.

Die Erfindung betrifft auch ein Verfahren zum Erkennen eines Schienenbruchs (20).

## Beschreibung

### Technisches Gebiet

Die Erfindung betrifft eine eisenbahntechnische Anlage mit wenigstens einer Fahrstrecke mit je zwei Schienen, mit wenigstens einem sich auf der Fahrstrecke bewegenden elektrischen Schienenfahrzeug, mit wenigstens einer Traktionsenergieversorgungseinrichtung zur Traktionsenergieversorgung des Schienenfahrzeugs, und mit wenigstens einer Sensoreinrichtung zum Erkennen eines Schienenbruchs, wobei die Traktionsenergieversorgungseinrichtung wenigstens ein Unterwerk, wenigstens einen Zuleitungspfad in Richtung vom Unterwerk zum Schienenfahrzeug und wenigstens einen abschnittsweise mehrere parallel geschaltete Leiter aufweisenden Rückleitungspfad in Richtung vom Schienenfahrzeug zum Unterwerk umfasst, wobei der Zuleitungspfad zumindest teilweise von einer entlang der Fahrstrecke angeordnete Fahrleitung und der Rückleitungspfad zumindest teilweise von den Schienen ausgebildet werden.

Weiterhin betrifft die Erfindung ein Verfahren zum Erkennen eines Schienenbruchs in einer eisenbahntechnischen Anlage, wobei die eisenbahntechnische Anlage wenigstens eine Fahrstrecke mit je zwei Schienen, wenigstens ein sich auf der Fahrstrecke bewegendes elektrisches Schienenfahrzeug und wenigstens eine Traktionsenergieversorgungseinrichtung zur Traktionsenergieversorgung des Schienenfahrzeugs aufweist, wobei die Traktionsenergieversorgungseinrichtung wenigstens ein Unterwerk, wenigstens einen Zuleitungspfad in Richtung vom Unterwerk zum Schienenfahrzeug und wenigstens einen abschnittsweise mehrere parallel geschaltete Leiter aufweisenden Rückleitungspfad in Richtung vom Schienenfahrzeug zum Unterwerk umfasst, wobei der Zuleitungspfad zumindest teilweise von einer entlang der Fahrstrecke angeordneten Fahrleitung und der Rückleitungspfad zumindest teilweise von den Schienen ausgebildet werden.

### Technischer Hintergrund

Eisenbahntechnische Anlagen gelten im Allgemeinen als besonders sicher, da die Bewegung der Schienenfahrzeuge auf den Gleisten von Schienen besonders zuverlässig funktioniert. Entgleisungen von Schienenfahrzeugen sind heute äußerst selten und meistens nur auf Defekte in der Eisenbahnanlage zurückzuführen. Eine der Ursachen für Entgleisungen sind Schienenbrüche. Daher ist es wünschenswert, Schienenbrüche in einer eisenbahntechnischen Anlage möglichst frühzeitig zu erkennen, um mögliche Folgen zu verhindern.

Schienenbrüche werden in bekannten eisenbahntechnischen Anlagen beispielsweise durch gleichstromkreisbasierte Systeme überwacht. Die hierfür notwendigen Gleichstromkreise sind allerdings mit erheblichen Kosten verbunden, da Gleichstromkreise flächendeckend eingesetzt und gewartet werden müssen. Dies ist aber nicht in allen Anlagen der Fall. Ein alternatives System für die Erkennung von Schienenbrüchen sind sogenannte "near track sensor Systeme", bei denen mit fahrzeugseitig montierten, induktiv oder ultraschallbasiert arbeitenden Sensoren Schienenbrüche erkannt werden. Leider sind diese Systeme bisher nicht sehr zuverlässig, so dass ihre Erkennungsrate nicht zufriedenstellend ist.

### Zusammenfassung der Erfindung

Es ist daher die Aufgabe der vorliegenden Erfindung, eine eisenbahntechnische Anlage und ein Verfahren der eingangs genannten Art bereitzustellen, mit denen Schienenbrüche zuverlässig und kostengünstig erkannt werden können.

Erfindungsgemäß wird die Aufgabe dadurch gelöst, dass die Sensoreinrichtung mit den mehreren parallel geschalteten Leitern verbunden ist und zum Ermitteln wenigstens eines Werts, der für eine Stromdifferenz in den Leitern und/oder für eine Spannung zwischen den Leitern repräsentativ ist, ausgebildet ist und wenigstens eine Recheneinrichtung umfasst, die zum Ausgeben wenigstens eines Schienenbruchsignals, wenn der ermittelte Wert außerhalb eines vorgegebenen Bereichs liegt, ausgebildet ist.

Weiterhin wird die Aufgabe durch das Verfahren der eingangs genannten Art dadurch gelöst, dass mittels der Sensoreinrichtung wenigstens ein Wert ermittelt wird, der für eine Stromdifferenz in den Leitern und/oder für eine Spannung zwischen den Leitern repräsentativ ist, und wenigstens ein Schienenbruchsignals ausgegeben wird, wenn der ermittelte Wert außerhalb eines vorgegebenen Bereichs liegt.

Die erfindungsgemäße Lösung hat den Vorteil, dass sich hierdurch Schienenbrüche effektiv und mit relativ geringem Aufwand erkennen lassen. Dabei wird die Eigenschaft von elektrischen Bahnen ausgenutzt, dass der Strom im Rückleitungspfad vom Schienenfahrzeug zum Unterwerk parallel über die beiden Schienen der Fahrstrecke geleitet wird. Der Stromkreis verläuft bei elektrischen Bahnen vom Unterwerk über den Zuleitungspfad zum Antrieb des Schienenfahrzeugs und vor dort über den Rückleitungspfad zurück zum Unterwerk. Der Rückleitungspfad wird dabei im Abschnitt von der Achse des Schienenfahrzeugs bis zum Unterwerk üblicherweise über parallel geschaltete Leiter ausgebildet, zu denen auch die Schienen zählen. Wenn eine der beiden Schienen einen Schienenbruch erfährt, ändert sich deren elektrische Eigenschaft. Da über die Bruchstelle kein oder sehr wenig elektrischer Stromfluss möglich ist, wird der elektrische Widerstand an der Bruchstelle unendlich oder zumindest sehr groß. Da die beiden Schienen über die Achse des Schienenfahrzeugs parallelgeschaltet sind, verläuft der Rückleitungspfad des Stromkreises in diesem Fall komplett über die intakte Schiene ohne Schienenbruch. Hierdurch vergrößert sich die Stromstärke in dieser Schiene ohne Schienenbruch. Dieser Effekt wird durch die erfindungsgemäße Sensoreinrichtung ausgenutzt.

Die Traktionsenergieversorgungseinrichtung sorgt für die übliche Traktionsenergieversorgung des Schienenfahrzeugs. Dabei wird die Traktionsenergie von dem Unterwerk zur Verfügung gestellt, das mit dem öffentlichen Energienetz oder auch einem speziellen Bahnenergienetz verbunden ist. Das Unterwerk könnte auch als Umspannwerk bezeichnet werden, da es die elektrische Energie aus dem öffentlichen Energienetz oder dem speziellen Bahnenergienetz in die vom Schienenfahrzeug benötigte Stromstärke umwandelt. Dies können sowohl Gleichströme als auch Wechselströme unterschiedlicher Stärken sein, je nach Ausgestaltung der Anlage. Vom Unterwerk wird die Traktionsenergie über den Zuleitungspfad, der zumindest teilweise von der entlang der Fahrstrecke angeordneten Fahrleitung ausgebildet ist, zum Schienenfahrzeug geleitet. Die Fahrleitung ist beispielsweise eine Oberleitung oder eine dritte Schiene, mit denen das Schienenfahrzeug über einen Stromabnehmer im schleifenden Kontakt steht. Im Schienenfahrzeug wird mit Hilfe der bereitgestellten Traktionsenergie der wenigstens eine Traktionsmotor für die Traktion des Schienenfahrzeugs angetrieben. Der Rückleitungspfad vom Antriebsmotor teilt sich über eine Achse mit zwei Rädern auf die beiden Schienen auf. Über weitere Leiter, wie beispielsweise geeigneten Verbindungsleitungen, sind die Schienen jeweils mit dem Unterwerk im Rückleitungspfad verbunden.

Erfindungsgemäß ist die Sensoreinrichtung mit den parallel geschalteten Leitern verbunden und ermittelt im Betrieb jeweils einen Wert, der für die Stromdifferenz in den Leitern und/oder für eine Spannung zwischen den Leitern repräsentativ ist. Dabei kann die Sensoreinrichtung entweder direkt mit den Schienen verbunden sein oder aber auch mit den weiteren parallel geschalteten Leitern im Rückleitungspfad, wie beispielsweise den Verbindungsleitungen zum Unterwerk. Im Normalfall ohne Schienenbruch ist der Strom in den Leitern etwa gleich und die Spannung zwischen den Leitern ist daher null oder etwa null. Im Fall eines Schienenbruchs verändern sich die von der Sensoreirichtung ermittelten Werte bzw. der ermittelte Wert, da der komplette Stromfluss des Rückleitungspfads über die eine unbeschädigte Schiene verläuft.

Die ermittelten Werte bzw. der ermittelte Wert werden von der Recheneinrichtung überwacht und, wenn zumindest einer der ermittelten Werte außerhalb eines vorgegebenen Bereichs liegt, wird das Schienenbruchsignal ausgegeben. Beispielsweise kann das Schienenbruchsignal beim Triebfahrzeugführer des Schienenfahrzeugs angezeigt werden, der entsprechende Maßnahmen einleitet, oder automatisiert an eine Leitstelle weitergegeben werden, die weitere Maßnahmen ergreift.

### Ausgestaltungen der Erfindung

Die erfindungsgemäße Lösung kann durch vorteilhafte Ausgestaltung weiterentwickelt werden, die im Folgenden beschrieben sind.

So kann die Sensoreinrichtung wenigstens zwei Strommesseinrichtungen umfassen, die jeweils zur Strommessung in einem der Leiter ausgebildet und mit einem der Leiter verbunden sind. Dies hat den Vorteil, dass Strommesseinrichtungen wie beispielsweise Amperemeter sehr kostengünstig verfügbar sind. Alternativ oder zusätzlich kann die Sensoreinrichtung wenigstens eine Spannungsmesseinrichtung umfassen, die zur Spannungsmessung zwischen den Leitern ausgebildet ist. Auch Spannungsmesseinrichtungen wie beispielsweise Voltmeter sind kostengünstig verfügbar. Bei der Verwendung einer Spannungsmesseinrichtung kann dadurch in der eisenbahntechnischen Anlage eine Wheatstonesche Brücke aufgebaut werden, die Widerstandsänderungen durch einen Schienenbruch in einer der beiden Schienen besonders gut detektiert.Die Schaltung der Wheatstoneschen Brücke hat den Vorteil, dass selbst kleinste Widerstandsänderungen in einem der Abschnitte sehr leicht erkannt werden. Dadurch können Schienenbrüche besonders gut aufgedeckt werden.

Um eine Montage der Sensoreinrichtung zu vereinfachen, kann die Sensoreinrichtung wenigstens zwei Verbindungsmittel zum Verbinden mit den zwei Schienen umfassen. Die Verbindungsmittel können beispielsweise geeignete Kabel mit am Ende angeordneten Kabelschuhen oder anderen Verbindern sein, die sich beispielsweise leicht an vorhandenen Verschraubungen der Schienen montieren lassen.

Ferner kann die Sensoreinrichtung ausgebildet sein, mehrere Werte während der Fahrt des Schienenfahrzeugs auf der Fahrstrecke, insbesondere im Wesentlichen kontinuierlich, zu ermitteln. Dies hat den Vorteil, dass sich aus mehreren hintereinander gemessenen Werten die Position des Schienenbruchs ermitteln lässt, weil sich bei Überfahrt des Schienenbruchs durch das Schienenfahrzeug die Werte ändern. Sobald der Schienenbruch von der im Rückleitungspfad befindlichen Achse des Schienenfahrzeugs passiert wird, ist der Schienenbruch nicht mehr im Stromkreis der Traktionsenergieversorgungseinrichtung vorhanden, so dass der Stromfluss wieder über beide Schienen funktioniert. Somit ändern sich die von der Sensoreinrichtung ermittelten Werte ab der Passage des Schienenbruchs.

Um die Position des Schienenbruchs leichter ermitteln zu können, kann die eisenbahntechnische Anlage wenigstens eine Leitstelle umfassen, in der eine aktuelle Position des Schienenfahrzeugs erfasst ist und die zum Empfangen des Schienenbruchsignals von der Sensoreinrichtung sowie zum Ermitteln einer Position des Schienenbruchs ausgebildet ist. Bei modernen eisenbahntechnischen Anlagen, die beispielsweise eine Zugüberwachung gemäß CBTC (Communication Based Train Control) oder ETCS (European Train Control System) aufweisen, sind die Positionen des Schienenfahrzeugs während der Fahrt bekannt. Wenn der Zeitpunkt erfasst wird, an dem sich die von der Sensoreinrichtung ermittelten Werte ändern, kann darüber die Position des Schienenfahrzeugs ermittelt werden, an dem die Passage des Schienenbruchs stattfand.

In einer vorteilhaften Ausgestaltung kann die eisenbahntechnische Anlage wenigstens eine Achszähleinrichtung umfassen, die an wenigstens einer der Schienen angeordnet ist und zum Zählen von Radbewegungen des Schienenfahrzeugs ausgebildet ist, und die Sensoreinrichtung mit der Achszähleinrichtung in einem gemeinsamen Gehäuse angeordnet ist. Dies hat den Vorteil, dass so Synergien genutzt werden können und beispielsweise die gleiche Kontaktstelle an der Schiene für die Achszähleinrichtung und die Sensoreinrichtung genutzt werden können.

Ferner betrifft die Erfindung auch eine Sensoreinrichtung zum Erkennen eines Schienenbruchs in einer eisenbahntechnischen Anlage, wobei diese zum Einbau in die eisenbahntechnische Anlage nach einer der zuvor genannten Ausführungsformen ausgestaltet ist und die Sensoreinrichtung mit den zwei Leitern verbindbar ausgebildet ist und zum Ermitteln wenigstens eines Werts, der für eine Stromdifferenz in den Leitern und/oder für eine Spannung zwischen den Leitern repräsentativ ist, ausgebildet ist und wenigstens eine Recheneinrichtung umfasst, die zum Ausgeben wenigstens eines Schienenbruchsignals, wenn der ermittelte Wert außerhalb eines vorgegebenen Bereichs liegt, ausgebildet ist.

In einer vorteilhaften Ausgestaltung des erfindungsgemäßen Verfahrens können mittels der Sensoreinrichtung mehrere Werte jeweils für unterschiedliche Positionen des Schienenfahrzeugs auf der Fahrstrecke, insbesondere im Wesentlichen kontinuierlich, ermittelt werden und aus dem Verlauf der ermittelten Werte eine Position des Schienenbruchs bestimmt werden.

Dies hat den Vorteil, dass auf einfache Weise die Position des Schienenbruchs ermittelbar ist und dadurch eine Wartung bzw. Reparatur gezielter durchgeführt werden kann. Wenn der Schienenbruch von dem Schienenfahrzeug passiert wird, ändern sich die von der Sensoreinrichtung ermittelten Werte, weil danach der Rückleitungspfad wieder über beide Schienen zum Unterwerk verläuft.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

### Exemplarische Ausführungsbeispiele der Zeichnung

Im Folgenden wird die Erfindung mit Bezug auf die beigefügten Zeichnungen erläutert.

Es zeigen:
- Fig. 1: eine schematische Darstellung einer beispielhaften Ausführungsform einer erfin-dungsgemäßen eisenbahntechnischen Anlage;
- Fig. 2: eine schematische Darstellung eines Ersatzschaubildes zur eisenbahntechni-schen Anlage in Figur 1;
- Fig. 3: eine schematische Darstellung einer weiteren beispielhaften Ausführungsform einer erfindungsgemäßen eisenbahntechnischen Anlage.

### Detaillierte Beschreibung der Ausführungsbeispiele

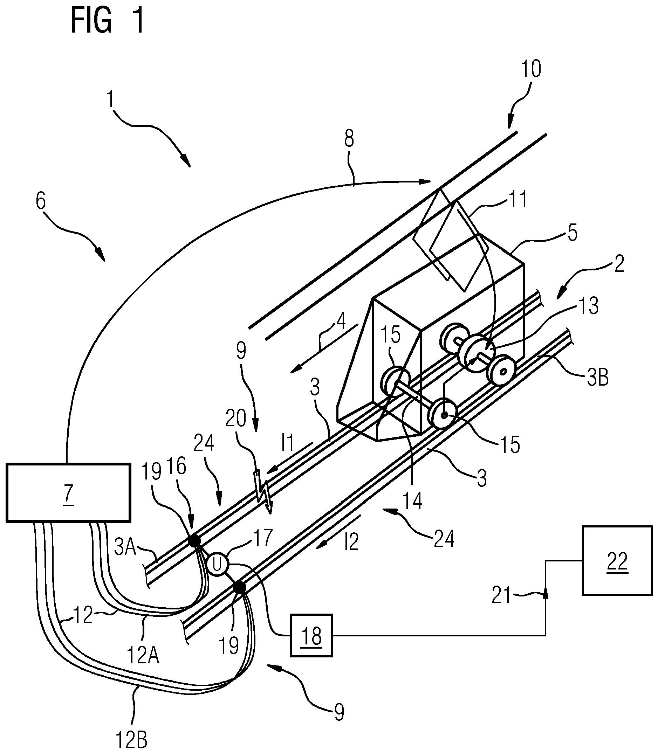

Zunächst wird die Erfindung mit Bezug auf die beispielhafte Ausführungsform in Figur 1 erläutert.

Figur 1 zeigt eine beispielhafte Ausführungsform einer erfindungsgemäßen eisenbahntechnischen Anlage 1, die eine Fahrstrecke 2 mit zwei Schienen 3, ein sich auf der Fahrstrecke 2 in einer Fahrtrichtung 4 bewegendes elektrisches Schienenfahrzeug 5 und eine Traktionsenergieversorgungseinrichtung 6 umfasst.

Die Traktionsenergieversorgungseinrichtung 6 weist ein Unterwerk 7 auf, das die Traktionsenergie für das Schienenfahrzeug 5 zur Verfügung stellt. Hierfür wird die Traktionsenergie in einem Zuleitungspfad 8 zum Schienenfahrzeug 5 und über einen Rückleitungspfad 9 zurück zum Unterwerk 7 geleitet. Für den Zuleitungspfad 8 umfasst die Traktionsenergieversorgungseinrichtung 6 eine entlang der Fahrstrecke 2 angeordnete Fahrleitung 10, die von einem Stromabnehmer 11 des Schienenfahrzeugs 5 kontaktiert wird. Über nicht dargestellte Anschlussleitungen ist die Fahrleitung 10 mit dem Unterwerk 7 in bekannter Weise elektrisch verbunden. Der Rückleitungspfad 9 der Traktionsenergieversorgungseinrichtung 6 wird bei der Ausführungsform in Figur 1 im Wesentlichen von den beiden Schienen 3 und von zwei Verbindungsleitungen 12, die jeweils mit einer Schiene 3 verbunden sind, gebildet. Innerhalb des Schienenfahrzeugs 5 fließt die Traktionsenergie im Zuleitungspfad 8 vom Stromabnehmer 11 zu einem Antriebsmotor 13, der das Schienenfahrzeug 5 antreibt. Im Rückleitungspfad 9 fließt der Strom bzw. die Traktionsenergie vom Antriebsmotor 13 über eine Achse 14 mit zwei Rädern 15, über die Schienen 3 und die Verbindungsleitung 12 zurück zum Unterwerk 7. Durch die Achse 14 wird der Energiefluss somit über parallel geschaltete Leiter 24 geführt, die von den Schienen 3 und den Verbindungsleitungen 12 ausgebildet sind. Im Betrieb der eisenbahntechnischen Anlage 1 bilden das Unterwerk 7, der Zuleitungspfad 8, der Rückleitungspfad 9 mit den parallel geschalteten Leitern 24 und das Schienenfahrzeug 5 mit seinem Antriebsmotor 13 einen Stromkreis.

Die erfindungsgemäße eisenbahntechnische Anlage 1 umfasst weiterhin eine erfindungsgemäße Sensoreinrichtung 16 zum Erkennen eines Schienenbruchs. Die Sensoreinrichtung 16 umfasst in der beispielhaften Ausführungsform in Figur 1 eine Spannungsmesseinrichtung 17 und eine Recheneinrichtung 18 und weiterhin Verbindungsmittel 19, durch die die Spannungsmesseinrichtung 17 mit den Schienen 3 verbunden ist. Die Verbindungsmittel 19 sind beispielsweise Kabel mit am Ende angeordneten Kabelschuhen, die mit jeweils einer Schiene 3 verschraubt sind. Dabei sind die Verbindungsmittel 19 an im Wesentlichen gegenüberliegenden Stellen der Schienen 3 angeordnet, so dass der jeweilige Abstand und damit auch der Widerstand zur Achse 14 gleich sind. Die Recheneinrichtung 18 ist signaltechnisch mit der Spannungsmesseinrichtung 17 verbunden.

Die Sensoreinrichtung 16 ermittelt mittels der Spannungsmesseinrichtung 17 die elektrische Spannung U zwischen den Leitern 24, bei der Ausführungsform in Fig. 1 insbesondere zwischen den Schienen 3. Ein für die Spannung repräsentativer Wert wird an die Recheneinrichtung 18 übermittelt und überwacht. Im Normalfall, das heißt ohne einen Schienenbruch, fließt der Strom im Rückleitungspfad 9 aufgeteilt auf die beiden Schienen 3 und Verbindungsleitung 12 zum Unterwerk 7 zurück. Bei der beispielhaften Ausführungsform in Figur 1 stellt das Unterwerk 7 beispielsweise einen Strom mit der Stärke 1400 Ampere als Traktionsstrom zur Verfügung. Im Rückleitungspfad 9 im Bereich der parallel geschalteten Leiter 24 aus Schienen 3 und Verbindungsleitungen 12 teilt sich der Strom zu jeweils I₁=700 A und I₂ =700 A gleichmäßig auf. Da also der Strom in beiden Leitern 24 die gleiche Stärke hat (700 A in der beispielhaften Ausführungsform in Figur 1), ist die gemessene Spannung U zwischen den Leitern 24 im Rückleitungspfad 9 gleich null.

Wenn ein Schienenbruch 20 in der einen Schiene 3 auftritt, ändert sich der Stromfluss in den Leitern 24, was von der erfindungsgemäßen Sensoreinrichtung 16 ermittelt wird. Um die beiden Schienen 3 leichter unterscheiden zu können, wurden zusätzlich die Bezugszeichen 3A und 3B für die einzelnen Schienen 3 eingeführt. Der Schienenbruch 20 ist bei der Ausführungsform in Fig. 1 somit in der Schiene 3A aufgetreten. Durch den Schienenbruch 20 wird der elektrische Widerstand in der Schiene 3A an der Stelle des Schienenbruchs 20 unendlich, so dass kein Strom fließen kann und I₁ gleich null ist. Da die Leiter 24 mit den Schienen 3 über die Achse 14 parallelgeschaltet sind, fließt der gesamte Strom durch den Schienenbruch 20 komplett in der nicht gebrochenen Schiene 3B, so dass I₂ gleich 1400 A ist. Durch diese Veränderung ändert sich auch die Spannung U zwischen den beiden Leitern 24, so dass die von der Sensoreinrichtung 16 gemessene Spannung U ungleich null ist. In der Recheneinrichtung 18 ist ein Wertebereich für die Spannung zwischen den Leitern 24 hinterlegt, der für keinen Schienenbruch spricht. Wenn der aktuell ermittelte Wert nicht in diesem Wertebereich liegt, gibt die Recheneinrichtung 18 ein Schienenbruchsignal aus, das einen Schienenbruch anzeigt. Dieses Schienenbruchsignal 21 wird beispielsweise an eine Leitstelle 22 übermittelt, an welcher weitere Maßnahmen ergriffen werden können.

Bei der beispielhaften Ausführungsform in Figur 1 werden von der Sensoreinrichtung 16 während der Fahrt des Schienenfahrzeugs 5 in der Fahrtrichtung 4 im Wesentlichen kontinuierlich Werte für die Spannung zwischen den Leitern 24 ermittelt und aufgezeichnet. Aus diesen aufgezeichneten Werten entsteht ein Verlauf, der ausgewertet werden kann. Der Wert verändert sich nämlich, wenn das Schienenfahrzeug 5 mit der Achse 14 den Schienenbruch 20 passiert hat. Ab dort läuft nämlich der Stromfluss auch wieder über den zweiten Leiter 24 mit der Schiene 3 und der Verbindungsleitung 12 zurück zum Unterwerk, weil der Schienenbruch 20 jetzt außerhalb des Stromkreises liegt. Ab hier wird die Spannung zwischen den Leitern 24 wieder zu null, weil in beiden Schienen 3 Strom fließt. Aus dem Zeitpunkt, an dem sich der Messwertverlauf wie beschrieben ändert, und der Position des Schienenfahrzeugs 5 zu diesem Zeitpunkt kann somit die Position des Schienenbruchs 20 ermittelt werden, wenn die Position des Schienenfahrzeugs 5 in diesem Zeitpunkt bekannt ist. In der Ausführungsform der eisenbahntechnischen Anlage 1 in Fig. 1 ist das Schienenfahrzeug 5 mit einer modernen Zugüberwachungseinrichtung, wie beispielsweise CBTC oder ETCS, ausgestattet. In diesem Zugüberwachungssystem ist daher die Position des Schienenfahrzeugs 5 im Wesentlichen ständig bekannt, so dass hierdurch die Position des Schienenbruchs 20 ermittelt werden kann. Dies ist von Vorteil, weil anschließend eine gezielte Reparatur bzw. Wartung für den Schienenbruch 20 möglich ist und diese auch schneller erfolgen kann.

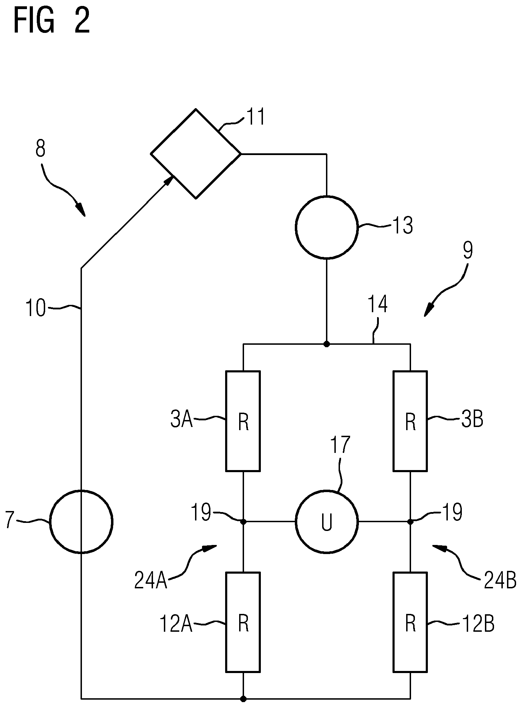

Figur 2 zeigt ein Ersatzschaubild für den oben bereits beschriebenen Stromkreis, der für die Traktionsenergieversorgungseinrichtung 6 in der Ausführungsform in Figur 1 gilt. Gleiche Bezugszeichen bezeichnen hier gleiche Teile.

Zur leichteren Identifizierung wurden die parallelen Leiter mit den Schienen 3 und Verbindungsleitungen 12 im Rückleitungspfad 9 mit den Buchstaben A und B bezeichnet. Da die Schienen 3 im elektrischen Sinne Widerstände darstellen, sind diese im Ersatzschaubild in Figur 2 mit den Buchstaben R bezeichnet und mit dem Symbol für einen elektrischen Widerstand dargestellt.

Wie in Figur 2 ersichtlich, sind die Widerstände der Schienen 3 und der Verbindungsleitungen 12 quasi zu einem Quadrat zusammengeschaltet, bei dem die Spannungsmesseinrichtung 17 in der einen Diagonalen und das Unterwerk 7 als Energiequelle in der anderen Diagonalen angeordnet sind. Dies ist gleich mit dem Aufbau einer Wheatstoneschen Messbrücke, die zum Messen von Widerstandsunterschieden bzw. -änderungen geeignet ist und sich daher auch für die erfindungsgemäße Ausführung der eisenbahntechnischen Anlage 1 besonders eignet.

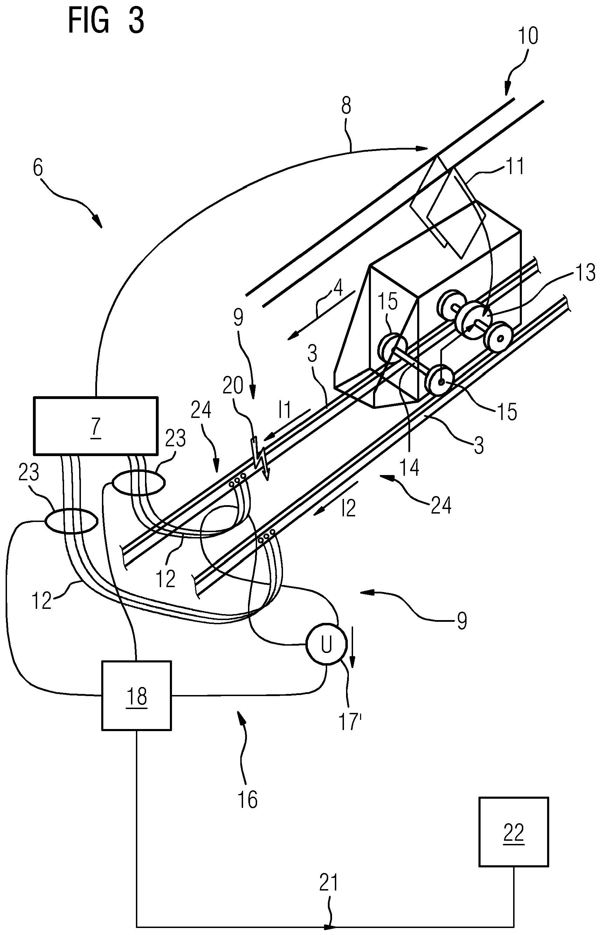

Im Folgenden wird die weitere Ausführungsform der erfindungsgemäßen eisenbahntechnischen Anlage 1 in Figur 3 beschrieben. Der Einfachheit halber wird lediglich auf die Unterschiede zur Ausführungsform in Figur 1 eingegangen. Gleiche Bezugszeichen bezeichnen gleiche Teile.

Die erfindungsgemäße Sensoreinrichtung 16 umfasst bei der Ausführungsform in Figur 3 zusätzlich zwei Strommesseinrichtungen 23, die jeweils in einem der Leiter 24 des

Rückleitungspfads 9 angeordnet sind. Bei der beispielhaften Ausführungsform in Figur 3 sind diese Strommesseinrichtungen 23 an den Verbindungsleitungen 12 angeordnet. Alternativ können sie aber auch an den Schienen 3 angeordnet sein. Als Strommesseinrichtungen 23 können beispielsweise an den Verbindungsleitungen 12 oder neben der Schiene angeordnete Stromzangen mit Hall-Sensoren oder Rogowskispulen verwendet werden. Die Spannungsmesseinrichtung 17' misst bei der beispielhaften Ausführungsform in Figur 3 die Spannung zwischen den Verbindungsleitungen 12. Es wäre aber alternativ auch hier möglich, dass die Spannungsmesseinrichtung 17' genau wie die Spannungsmesseinrichtung 17 gemäß der Ausführungsform in Figur 1 auszubilden, die die Spannung U zwischen den Schienen 3 misst.

Erfindungsgemäß kann die Spannung U an beliebiger Stelle zwischen den Leitern 24 und/oder die Ströme I₁, I₂ an beliebigen Stellen zwischen den Leitern 24 gemessen werden.

Das erfindungsgemäße Erkennen eines Schienenbruchs 20 geschieht bei der Ausführungsform in Figur 3 in gleicher Weise wie bei der Ausführungsform in Figur 1. Bei der Ausführungsform in Figur 3 wird der Stromfluss in den Verbindungsleitungen 12 ermittelt. Im Normalfall, das heißt ohne Schienenbruch, sind die ermittelten Werte I₁ und I₂ in den beiden Verbindungsleitungen 12 im Wesentlichen gleich. Bei einem Schienenbruch 20 verändert sich dieses Verhältnis in gleicher Weise wie oben bereits für die Ausführungsform in Figur 1 beschrieben. Somit wird der Wert für I₁ gleich null und der Wert für I₂ so erhöht, da der gesamte Strom des Rückleitungspfads 9 über diese Verbindungsleitung 12 fließt. Die Recheneinrichtung 18 bildet bei der Ausführungsform in Figur 3 zusätzlich eine Stromdifferenz aus den durch die Strommesseinrichtungen 23 ermittelten Werten. Im Normalfall, d.h. ohne Schienenbruch, ist die Differenz gleich null. Im Fall eines Schienenbruch 20 jedoch ist die Differenz ungleich null und der Schienenbruch kann so erkannt werden.

Die Recheneinrichtung 18 in der Ausführungsform in Fig. 3kann gleichzeitig auch die von der Spannungsmesseinrichtung 17' ermittelten Werte in gleicher Weise wie oben für die Ausführungsform in Fig. 1 beschrieben überwachen. So kann eine redundante Überprüfung durchgeführt werden. Alternativ könnte auch die Spannungsmesseinrichtung 17 aus Fig. 1 verwendet werden, die die Spannung zwischen den Schienen 3 misst.

Die Recheneinrichtung 18 kann optional so ausgestaltet sein, dass das Schienenbruchsignal 21 nur ausgegeben wird, wenn sowohl durch die Werte von der Spannungsmesseinrichtung 17 als auch durch die Werte der beiden Strommesseinrichtungen 23 ein Schienenbruch ermittelt wurde.

Alternativ zur Ausführungsform in Fig. 3 kann die erfindungsgemäße eisenbahntechnische Anlage 1 auch ohne Spannungsmesseinrichtung 17 ausgebildet sein, und den Schienenbruch 20 auch nur durch die Werte der beiden Strommesseinrichtungen 23 ermitteln.

## Patentansprüche

1. Eisenbahntechnische Anlage (1),
mit wenigstens einer Fahrstrecke (2) mit je zwei Schienen (3),
mit wenigstens einem sich auf der Fahrstrecke (2) bewegenden elektrischen Schienenfahrzeug (5),
mit wenigstens einer Traktionsenergieversorgungseinrichtung (6) zur Traktionsenergieversorgung des Schienenfahrzeugs (5), und
mit wenigstens einer Sensoreinrichtung (16) zum Erkennen eines Schienenbruchs (20),
wobei die Traktionsenergieversorgungseinrichtung (6) wenigstens ein Unterwerk (7), wenigstens einen Zuleitungspfad (8) in Richtung vom Unterwerk (7) zum Schienenfahrzeug (5) und wenigstens einen abschnittsweise mehrere parallel geschaltete Leiter aufweisenden Rückleitungspfad (9) in Richtung vom Schienenfahrzeug (5) zum Unterwerk (7) umfasst,
wobei der Zuleitungspfad (8) zumindest teilweise von einer entlang der Fahrstrecke (2) angeordnete Fahrleitung (10) und der Rückleitungspfad (9) zumindest teilweise von den Schienen (3) ausgebildet werden,
**dadurch gekennzeichnet, dass**
die Sensoreinrichtung (16) mit den mehreren parallel geschalteten Leitern verbunden ist und zum Ermitteln wenigstens eines Werts, der für eine Stromdifferenz in den Leitern und/oder für eine Spannung zwischen den Leitern repräsentativ ist, ausgebildet ist und wenigstens eine Recheneinrichtung (18) umfasst, die zum Ausgeben wenigstens eines Schienenbruchsignals (21), wenn der ermittelte Wert außerhalb eines vorgegebenen Bereichs liegt, ausgebildet ist.

2. Eisenbahntechnische Anlage (1) nach Anspruch 1,
**dadurch gekennzeichnet, dass**
die Sensoreinrichtung (16) wenigstens zwei Strommesseinrichtungen (23) umfasst, die jeweils zur Strommessung in einem der Leiter ausgebildet und mit einem der Leiter verbunden sind.

3. Eisenbahntechnische Anlage (1) nach Anspruch 1 oder 2,
**dadurch gekennzeichnet, dass**
die Sensoreinrichtung (16) wenigstens eine Spannungsmesseinrichtung (17, 17`) umfasst, die zur Spannungsmessung zwischen den Leitern ausgebildet ist.

4. Eisenbahntechnische Anlage (1) nach einem der oben genannten Ansprüche,
**dadurch gekennzeichnet, dass**
die Sensoreinrichtung (16) wenigstens zwei Verbindungsmittel zum Verbinden mit den zwei Schienen (3) umfasst.

5. Eisenbahntechnische Anlage (1) nach einem der oben genannten Ansprüche,
**dadurch gekennzeichnet, dass**
die Traktionsenergieversorgungseinrichtung (6) im Rückleitungspfad (9) zwei jeweils mit einer Schiene (3) in einem Verbindungspunkt verbundene Verbindungsleitungen (12) umfasst und die Sensoreinrichtung (16) im Bereich der Verbindungspunkte mit den Schienen (3) verbunden ist.

6. Eisenbahntechnische Anlage (1) nach einem der oben genannten Ansprüche,
**dadurch gekennzeichnet, dass**
die Sensoreinrichtung (16) ausgebildet ist, mehrere Werte während der Fahrt des Schienenfahrzeugs (5) auf der Fahrstrecke (2), insbesondere im Wesentlichen kontinuierlich, zu ermitteln.

7. Eisenbahntechnische Anlage (1) nach einem der oben genannten Ansprüche,
**dadurch gekennzeichnet, dass**
die Anlage (1) wenigstens eine Leitstelle (22) umfasst, in der eine aktuelle Position des Schienenfahrzeugs (5) erfasst ist und die zum Empfangen des Schienenbruchsignals (21) von der Sensoreinrichtung (16) sowie zum Ermitteln einer Position des Schienenbruchs (20) ausgebildet ist.

8. Eisenbahntechnische Anlage (1) nach einem der oben genannten Ansprüche,
**dadurch gekennzeichnet, dass**
die Anlage (1) wenigstens eine Achszähleinrichtung umfasst, die an wenigstens einer der Schienen (3) angeordnet ist und zum Zählen von Radbewegungen des Schienenfahrzeugs (5) ausgebildet ist, und die Sensoreinrichtung (16) mit der Achszähleinrichtung in einem gemeinsamen Gehäuse angeordnet ist.

9. Sensoreinrichtung (16) zum Erkennen eines Schienenbruchs (20) in einer eisenbahntechnischen Anlage (1),
**dadurch gekennzeichnet, dass**
die Sensoreinrichtung (16) zum Einbau in die eisenbahntechnische Anlage (1) der oben genannten Ansprüche 1 bis 8 ausgestaltet ist,
die Sensoreinrichtung (16) mit den zwei Leitern verbindbar ausgebildet ist und zum Ermitteln wenigstens eines Werts, der für eine Stromdifferenz in den Leitern und/oder für eine Spannung zwischen den Leitern repräsentativ ist, ausgebildet ist und wenigstens eine Recheneinrichtung (18) umfasst, die zum Ausgeben wenigstens eines Schienenbruchsignals (21), wenn der ermittelte Wert außerhalb eines vorgegebenen Bereichs liegt, ausgebildet ist.

10. Verfahren zum Erkennen eines Schienenbruchs (20) in einer eisenbahntechnischen Anlage (1), wobei die eisenbahntechnische Anlage (1) wenigstens eine Fahrstrecke (2) mit je zwei Schienen (3), wenigstens ein sich auf der Fahrstrecke (2) bewegendes elektrisches Schienenfahrzeug (5) und wenigstens eine Traktionsenergieversorgungseinrichtung (6) zur Traktionsenergieversorgung des Schienenfahrzeugs (5) aufweist, wobei die Traktionsenergieversorgungseinrichtung (6) wenigstens ein Unterwerk (7), wenigstens einen Zuleitungspfad (8) in Richtung vom Unterwerk (7) zum Schienenfahrzeug (5) und wenigstens einen abschnittsweise mehrere parallel geschaltete Leiter aufweisenden Rückleitungspfad (9) in Richtung vom Schienenfahrzeug (5) zum Unterwerk (7) umfasst,
wobei der Zuleitungspfad (8) zumindest teilweise von einer entlang der Fahrstrecke (2) angeordnete Fahrleitung (10) und der Rückleitungspfad (9) zumindest teilweise von den Schienen (3) ausgebildet werden,
**dadurch gekennzeichnet, dass**
mittels der Sensoreinrichtung (16) wenigstens ein Wert ermittelt wird, der für eine Stromdifferenz in den Leitern und/oder für eine Spannung zwischen den Leitern repräsentativ ist, und
wenigstens ein Schienenbruchsignals (21) ausgegeben wird, wenn der ermittelte Wert außerhalb eines vorgegebenen Bereichs liegt.

11. Verfahren nach Anspruch 10,
**dadurch gekennzeichnet, dass**
mittels der Sensoreinrichtung (16) mehrere Werte jeweils für unterschiedliche Positionen des Schienenfahrzeugs (5) auf der Fahrstrecke (2), insbesondere im Wesentlichen kontinuierlich, ermittelt werden und aus dem Verlauf der ermittelten Werte eine Position des Schienenbruchs (20) bestimmt wird.

12. Computerprogrammprodukt mit Programmbefehlen zur Durchführung des Verfahrens nach einem der Ansprüche 10 oder 11.

13. Bereitstellungsvorrichtung für das Computerprogrammprodukt nach Anspruch 12, wobei die Bereitstellungsvorrichtung das Computerprogrammprodukt speichert und/oder bereitstellt.
